# EUROPÄISCHE PATENTANMELDUNG

(11) **EP 1 607 624 A2**
(43) Veröffentlichungstag der Anmeldung: **21.12.2005**
(21) Anmeldenummer: 05012630.9
(22) Anmeldetag: 10.06.2005
(51) Int. Cl.: F03D 1/06

(54) **Rotorblatt für eine Windenergieanlage**

(30) Priorität: 15.06.2004 DE 102004028916; 29.04.2005 DE 102005019905
(71) Anmelder: NORDEX ENERGY GmbH, 22848 Norderstedt (DE)
(72) Erfinder: Eberhard Voss Dr., 18233 Jörnstorf (DE); Birkemeyer Jochen Dr., 22850 Norderstedt (DE)
(74) Vertreter: Schildberg, Peter

(57) **Zusammenfassung**

Rotorblatt für eine Windenergieanlage, wobei mindestens in einem Bereich an einer Außenseite eine porige Oberfläche vorgesehen ist.

## Beschreibung

Die vorliegende Erfindung betrifft ein Rotorblatt für eine Windenergieanlage.

Der von einer Windenergieanlage abgestrahlte Lärm wird in ganz erheblichem Umfang von den Strömungsgeräuschen an den Rotorblättern bestimmt. Die Strömungsgeräusche steigen mit wachsender Geschwindigkeit stark an, so daß ein wesentlicher Faktor für die Lärmerzeugung die Geometrie und das Material der Rotorblattspitze ist. Experimentelle Untersuchungen haben ergeben, daß für die Lärmentstehung an dem Rotorblatt im wesentlichen drei Ursachen verantwortlich sind:
- Wechselwirkung von atmosphärischer Turbulenz mit der Blattoberfläche und der Anströmkante,
- turbulente Abströmung von der Blatthinterkante und
- Wechselwirkung des Blattspitzenwirbels mit der Blattoberfläche.

Aus DE 195 80 147 ist zur Reduzierung von Strömungsgeräuschen bekannt, das Rotorblatt mit einer nachgiebigen Hinterkante zu versehen.

Aus WO 00/34651 ist bekannt, das Rotorblatt mit einer Mikrostruktur (z.B. nach Art einer Haifischhaut) zu versehen.

Aus WO 01/98653 ist bekannt, schalldämpfendes Material auf der Oberfläche des Rotorblattes anzubringen.

Rotorblätter moderner Windenergieanlagen besitzen in der Regel zwei Halbschalen. Zwischen den Halbschalen befinden sich große Hohlräume, in denen sich infolge von Kondensation oder direktem Eindringen Wasser sammelt. Wenn dieses Wasser nicht abgeführt wird, besteht im Winter die Gefahr, daß das gefrorene Wasser das Rotorblatt beschädigt oder gar zerstört. Auch besteht die Gefahr, daß infolge von Blitzschlag in das Rotorblatt es zu einer explosionsartigen Verdampfung des Wassers kommt, so daß auch hierdurch das Rotorblatt und sein Aufbau zerstört werden können.

Es ist bekannt, in der Spitze des Rotorblatts Bohrungen zur Entwässerung vorzusehen. Diese Bohrungen werden an Stellen angebracht, die beim normalen Betrieb der Windenergieanlage sicherstellen, daß kein Wasser im Rotorblatt verbleibt. Die Größe dieser Bohrungen ist jedoch unter dem Gesichtspunkt des Lärmschutzes begrenzt, da die hohe Anströmgeschwindigkeit an dem Rotorblatt zu Geräuschen führt.

Neben dem Wasser in dem Rotorblatt befinden sich im Inneren des Rotorblatts in der Regel auch Schmutz, Staub und abgelöste Kleinteile aus der Fertigung des Rotorblatts. Ebenso wie das Wasser werden diese Teile unter dem Einfluß der Zentrifugalkraft in dem Rotorblatt bewegt. Dies birgt die Gefahr in sich, daß die Entwässerungsbohrung durch ein Gemisch aus Staub, Schmutz und Wasser verstopft und sich auf Dauer zusetzt.

Aus DE 102 48 201 A1 ist ein Kunststoffformkörper aus unregelmäßig zusammen-gesinterten Granulatkörnern aus Kunststoff bekannt. Der Formkörper eignet sich als Vorfiltermaterial.

Aus WO 02/48546 A1 ist die besondere Ausgestaltung eines Blitzfängers bekannt, der in einer Bohrung in der Blattspitze angeordnet ist. Blitzfänger und Bohrung bilden gemeinsam eine Entwässerungsöffnung. Nachteilig an dieser Konstruktion ist jedoch, daß auch diese Öffnung sich durch Schmutz und Kleinteile zusetzen kann.

Der Erfindung liegt die Aufgabe zugrunde, ein Rotorblatt bereitzustellen, das mit einfachen Mitteln zu einer Schallreduzierung im Betrieb der Windenergieanlage führt. Eine weitere Aufgabe besteht darin, ohne Erhöhung des erzeugten Lärms eine Entwässerungsbohrung in dem Rotorblatt vorzusehen, die leicht herstellbar ist und ein Zusetzen erfolgreich verhindert.

Erfindungsgemäß wird die Aufgabe durch ein Rotorblatt mit den Merkmalen aus Anspruch 1 gelöst. Vorteilhafte Ausgestaltung bilden die Gegenstände der Unteransprüche.

Das erfindungsgemäße Rotorblatt für eine Windenergieanlage besitzt mindestens in einem Bereich eine porige Oberfläche zur Lärmreduzierung. Die porige Oberfläche schafft auf einer Außenwand des Rotorblatts besonders günstige Strömungsverhältnisse, die zu einer deutlich reduzierten Schallemission führen. In einer bevorzugten Ausgestaltung ist für den Bereich der porigen Oberfläche ein poröses Material hergestellt. Es wird also zur Erzeugung der porigen Oberfläche ein Material verwendet, das eine porige Oberfläche besitzt.

Die porige Oberfläche weist eine Vielzahl von Poren auf. Die Poren verlaufen nach Art von kleinen Kanälen, durchgehend und/oder nicht durchgehend, und sind unterschiedlich relativ zu der Oberfläche ausgerichtet. Die Poren sind bevorzugt ungeordnet auf der Oberfläche verteilt. Die porige Struktur kann die Oberfläche eines porösen Materials sein, das für ein Fluid, wie beispielsweise Wasser oder Luft, durchlässig ist. Alternativ kann die porige Oberfläche auch auf einem nicht porösem Material vorgesehen sein, beispielsweise wenn ein Material nachträglich bearbeitet wird oder die porige Oberfläche in einem gesonderten Arbeitsschritt auf das Material aufgebracht wird. Bevorzugt ist das verwendete poröse Material für die mit einem entsprechenden Druck anströmende Luft durchlässig. In einer alternativen Ausgestaltung ist es auch denkbar, ein Material zu verwenden, das nachträglich bearbeitet wurde, um eine porige Oberfläche zu erhalten. Diese Bearbeitung muß dann nicht zwangsläufig zu einem porösen Material führen, das für ein Fluid durchlässig ist, sondern kann sich auf einen Oberflächenbereich beschränken.

In einer bevorzugten Ausgestaltung ist die porige Oberfläche in ihrer Gestalt nach Art eines Schaumes ausgebildet. Bevorzugtes Material für die porige Oberfläche ist ein Aluminiumschaum.

Die porige Oberfläche kann als Schicht auf der Außenseite des Rotorblatts angebracht sein, die bevorzugt in eine Ausnehmung in dem Rotorblatt eingesetzt ist. Die Schicht besteht bevorzugt aus dem porösen Material und bildet dabei im wesentlichen eine einheitliche Oberfläche, die plan in die übrige Oberfläche des Rotorblatts übergeht.

In einer alternativen Ausgestaltung ist das poröse Material ein massiver Körper, der bevorzugt in eine Durchbrechung in der Außenwand des Rotorblatts eingesetzt ist. Im Unterschied zu der Ausgestaltung mit einer Schicht aus porösem Material steht bei dieser Ausgestaltung der Innenraum des Rotorblatts in Verbindung mit dessen Außenseite. Alternativ oder ergänzend ist es auch möglich, Wandbereiche des Rotorblatts aus porösem Material zu bilden.

Da die Lärmerzeugung an dem Rotorblatt stark von der Strömungsgeschwindigkeit abhängt, ist die porige Oberfläche bevorzugt in dem Bereich der Blattspitze vorgesehen.

In einer bevorzugten Ausgestaltung besitzt die gesamte Blattspitze eine porige Oberfläche. Alternativ ist es auch möglich, daß das Rotorblatt im Bereich der Profilnase und/oder der Profilhinterkante eine porige Oberfläche besitzt.

Das Rotorblatt gemäß Anspruch 13 besitzt mindestens einen Hohlraum, der an eine Außenwand des Rotorblatts angrenzt. Die Außenwand des Rotorblatts besitzt mindestens eine Durchbrechung, in der ein poröses, wasserdurchlässiges Material angeordnet ist und die Durchbrechung verschließt. An der Außenseite des Blatts ist keine Öffnung vorhanden, an der Lärm entstehen könnte. Hierdurch kann die Durchbrechung in einer geeigneten Größe gewählt werden, um ausreichend Wasser abzuführen. Das Wasser wird durch das poröse Material aus dem Innenraum des Rotorblatts heraustransportiert.

In einer bevorzugten Ausgestaltung schließt das poröse Material bündig mit der Oberfläche der Außenwand des Rotorblatts ab. Abgesehen von dem Umstand, daß das Material eine poröse Oberfläche besitzt, ändern sich die Strömungseigenschaften des Rotorblatts nicht wesentlich, idealerweise kann sogar die Geräuschbildung vermindert werden.

Zweckmäßigerweise ist die Durchbrechung im Bereich der Blattspitze angeordnet, da das Wasser durch die Fliehkraft hierhin bei dem sich drehenden Rotorblatt gedrückt wird. Vorzugsweise befindet sich die Durchbrechung in dem freien Ende der Blattspitze, also dem am weitesten von der Blattwurzel entfernt liegenden Punkt.

Bevorzugt ist zusätzlich mindestens eine Durchbrechung auf der Saugseite des Rotorblatts vorgesehen. Alternativ ist es auch möglich die Durchbrechung auf einer Seite des Rotorblatts vorzusehen und auf eine Durchbrechung im Bereich der Blattspitze zu verzichten. Ferner kann die gesamte Blattpitze aus dem porösen Material bestehen.

Zweckmäßigerweise ist der Hohlraum im Bereich der Durchbrechung mit einer verschließbaren Zugriffsöffnung versehen. Die Zugriffsöffnung erlaubt es, bei Wartungsarbeiten in den Rotorblattinnenraum einzugreifen. Ferner ist bevorzugt ein Siebelement in dem Hohlraum nahe der Zugriffsöffnung angeordnet, wobei das Siebelement eine quer zur Längsrichtung des Rotorblatts stehende Auffangfläche für die oben genannten Schmutzpartikel besitzt.

In einer bevorzugten Ausgestaltung, zur Verhinderung des Zusetzens des porösen Materials, hat es sich als zweckmäßig erwiesen, wenn das poröse Material in den Hohlraum vorsteht und auf diese Weise eine große Innenfläche besitzt.

Als zweckmäßig für das poröse Material hat es sich erwiesen, einen Aluminiumschaum und/oder Edelstahlhohlkugeln vorzusehen, die durch ein kunststoffbasiertes Bindemittel zusammengehalten werden. Alternativ kann poröses Material aus gesintertem Kunststoffmaterial oder andere poröse Kunststoffmaterialien verwendet werden.

Die Erfindung wird anhand der Figuren nachfolgend näher erläutert.

Es zeigt:
- Fig. 1: eine Ansicht der Spitze eines Rotorblatts, in einer ersten Ausgestaltung,
- Fig. 2: eine Ansicht der Spitze eines Rotorblatts in einer zweiten Ausgestaltung,
- Fig. 3: eine Ansicht der Spitze eines Rotorblatts in einer dritten Ausgestaltung und
- Fig. 4: eine Ansicht der Spitze eines Rotorblatts in einer zweiten Ausführungsform,
- Fig. 5: einen Schnitt durch die Spitze des Rotorblatts aus Fig. 4 der Längsachse des Rotorblatts und
- Fig. 6: eine schematische Ansicht eines Rotorblatts von der Saugseite.

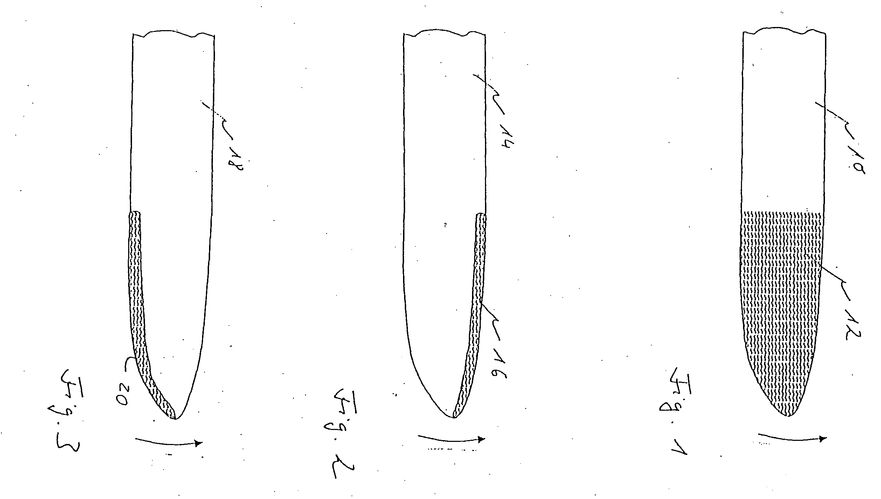

Fig. 1 zeigt die Spitze eines Rotorblatts 10 in einer Draufsicht. Der Pfeil in Figur 1-3 deutet jeweils die Bewegungsrichtung des Rotorblatts an. Die Spitze des Rotorblatts 12 besteht vollständig aus einem porösen Material, das in der Figur schematisch durch unterbrochene Wellenlinien dargestellt ist. Die Oberfläche des porösen Materials besitzt jedoch nicht notwendig eine regelmäßige Struktur, sondern kann auch die Struktur eines ungeordneten Schaumes besitzen. Das in Fig. 1 dargestellte poröse Material ist in der Art ausgebildet, daß es von der Luft durchströmt wird. Mit anderen Worten, die Kanäle des porösen Materials sind in dem in Fig. 1 dargestellten Ausführungsbeispiel derart ausgebildet, daß diese teilweise durchgängig sind und so ein Luftstrom durch das poröse Material erfolgt.

Fig. 2 zeigt eine alternative Ausgestaltung, bei der das poröse Material im Bereich der Profilnase des Blattes angeordnet ist. Das poröse Material bildet hierbei eine Kante im Bereich der Blattspitze, die angeströmt wird.

Fig. 3 zeigt eine alternative Ausgestaltung, bei der ein poröses Material an der Blatthinterkante vorgesehen ist. Wie bei dem Ausführungsbeispiel aus Fig. 2 bildet das poröse Material hierbei einen entlang der Kante laufenden Bereich 20, der sich über die von der Strömungsrichtung abgewandten Seite erstreckt.

Das poröse Material ist in den dargestellten Ausführungsbeispielen aus Aluminiumschaum ausgeführt, der eine porige Oberfläche besitzt. Es ist aber auch denkbar ein Material mit Edelstahlhohlkügelchen zu verwenden, die durch ein kunststoffbasiertes Bindemittel zusammengehalten werden. Alternativ kann als poröses Material auch ein gesintertes Kunststoffmaterial oder ein poröses Kunststoffmaterial verwendet werden. Das poröse Material kann ausschließlich im Bereich der Oberfläche vorgesehen sein, so daß der zugrunde liegende Blattaufbau weitgehend unverändert ist. Auch ist es möglich, das poröse Material an der Oberfläche vorzusehen und einen porösen Kern oder einen Hohlraum in dem Rotorblatt vorzusehen. Auch kann ein massiver Kern in dem Rotorblatt vorgesehen sein.

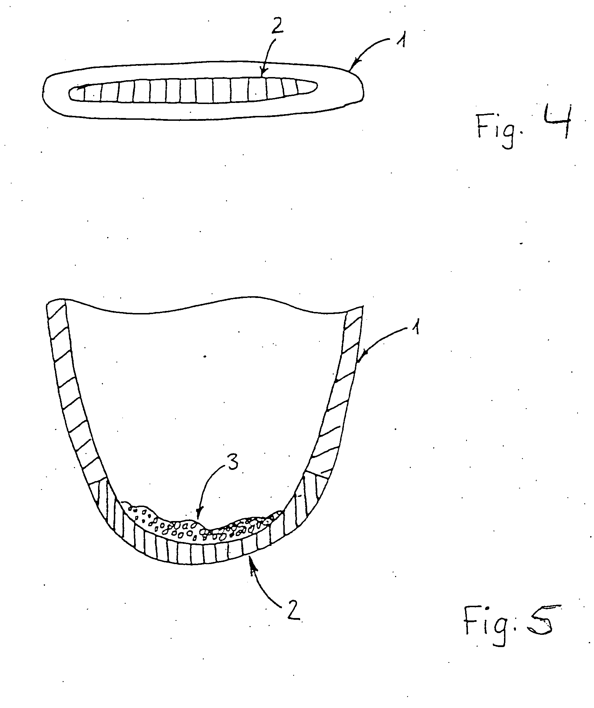

Fig. 4 zeigt eine Ansicht auf die Spitze eines Rotorblatts 1. Im Bereich der Spitze ist ein poröses Material 2 vorgesehen. Das poröse Material 2 besitzt ungeordnete Poren, über die Flüssigkeit nach außen transportiert wird. Da das poröse Material an der Flügelspitze angeordnet ist, wird das Wasser von der Innenseite zur Außenseite transportiert, wo es durch die Bewegung und ggf. durch eine geringere Feuchtigkeitskonzentration abtransportiert wird.

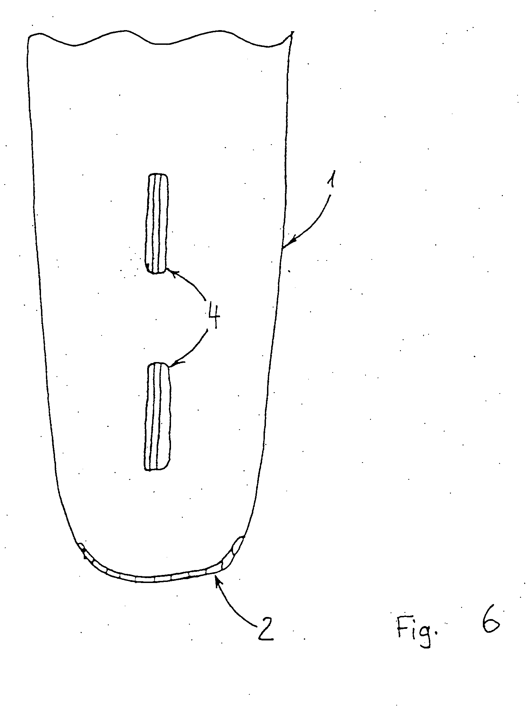

Fig. 5 zeigt einen Querschnitt durch die Flügelspitze aus Fig. 4, die bereits abgelagerte Schmutzreste 3 zeigt.

Um ein Zusetzen des porösen Materials zu verhindern, können verschiedene Ansätze gewählt werden. Bei einem ersten Ansatz wird beispielsweise eine Handklappe in der Rotorspitze vorgesehen, um bei Wartungsarbeiten in die Flügelspitze eingreifen zu können, damit das poröse Material auf der Innenseite gereinigt werden kann und Schmutzreste entfernt werden können. In einem zweiten Ansatz kann das poröse Material 2 auf seiner Innenseite erhaben, beispielsweise mit einem oder mehreren nach innen vorstehenden Vorsprüngen, einer Kegelform oder dergleichen ausgebildet sein, um auf diese Weise die Innenfläche des porösen Materials zu vergrößern. Die große Innenfläche verhindert ein Zusetzen. In einer dritten Möglichkeit kann zusammen mit der Handklappe ein Sieb oder ein Netz vor dem porösen Material angeordnet werden, um Schmutz und Kleinteile aufzufangen. Es ist ebenfalls möglich, jede der vorstehenden Möglichkeiten mit einer oder mehreren anderen Möglichkeiten zu kombinieren.

Fig. 6 zeigt das Rotorblatt in der Ansicht von der Saugseite. Im Bereich der Spitze ist das poröse Material 2 erkennbar. In Längsrichtung des Rotorblatts sind längliche Durchbrechungen 4 vorgesehen, die ebenfalls durch poröses Material verschlossen sind. Durch die Durchbrechungen 4 kann ebenfalls kondensiertes Wasser austreten und/oder ein Feuchtigkeitsausgleich mit der Umgebung stattfinden.

## Patentansprüche

1. Rotorblatt für eine Windenergieanlage, **dadurch gekennzeichnet, daß** mindestens in einem Bereich (12, 16, 20) einer Außenwand des Rotorblatts eine porige Oberfläche vorgesehen ist.

2. Rotorblatt nach Anspruch 1, **dadurch gekennzeichnet, daß** der Bereich (12, 16, 20) ein poröses Material mit einer porigen Oberfläche aufweist.

3. Rotorblatt nach Anspruch 2, **dadurch gekennzeichnet, daß** das poröse Material als massiver Körper vorgesehen ist.

4. Rotorblatt nach einem der Ansprüche 1 bis 3, **dadurch gekennzeichnet, daß** die porige Oberfläche eine Vielzahl von Poren aufweist.

5. Rotorblatt nach Anspruch 4, **dadurch gekennzeichnet, daß** die Poren ungeordnet auf der Oberfläche verteilt sind.

6. Rotorblatt nach Anspruch 5, **dadurch gekennzeichnet, daß** die Struktur der porigen Oberfläche nach Art eines erstarrten Schaumes ausgebildet ist.

7. Rotorblatt nach Anspruch 6, **dadurch gekennzeichnet, daß** ein Aluminiumschaum als Material für die porige Oberfläche vorgesehen ist.

8. Rotorblatt nach einem der Ansprüche 1 bis 7, **dadurch gekennzeichnet, daß** in dem Bereich (12, 16, 20) der Außenwand eine Schicht mit der porigen Oberfläche auf dem Rotorblatt vorgesehen ist.

9. Rotorblatt nach einem der Ansprüche 1 bis 8, **dadurch gekennzeichnet, daß** die porige Oberfläche im Bereich der Blattspitze vorgesehen ist.

10. Rotorblatt nach Anspruch 9, **dadurch gekennzeichnet, daß** die porige Oberfläche die gesamte Blattspitze bedeckt.

11. Rotorblatt nach Anspruch 9, **dadurch gekennzeichnet, daß** die porige Oberfläche im Bereich der Profilnase und/oder Profilhinterkante vorgesehen ist.

12. Verwendung von einem Material mit einer porigen Oberfläche an und/oder auf mindestens einer Außenseite einer Rotorblattwand zur Lärmreduzierung des sich drehenden Rotorblatts.

13. Rotorblatt nach Anspruch 1 mit mindestens einem Hohlraum, der an eine Außenwand (1) des Rotorblatts angrenzt, wobei die Außenwand mindestens eine Durchbrechung besitzt, in der ein poröses, wasserdurchlässiges Material angeordnet ist, das die porige Oberfläche bildet.

14. Rotorblatt nach Anspruch 13, **dadurch gekennzeichnet, daß** das poröse Material bündig mit der Oberfläche der Außenwand abschließt.

15. Rotorblatt nach Anspruch 13 oder 14, **dadurch gekennzeichnet, daß** die Durchbrechung im Bereich der Blattspitze angeordnet ist.

16. Rotorblatt nach Anspruch 15, **dadurch gekennzeichnet, daß** die Durchbrechung in dem freien Ende der Blattspitze angeordnet ist.

17. Rotorblatt nach einem der Ansprüche 13 bis 16, **dadurch gekennzeichnet, daß** zusätzlich mindestens eine Durchbrechung (4) auf der Saugseite und/oder Druckseite des Rotorblatts angeordnet ist.

18. Rotorblatt nach Anspruch 13 oder 14, **dadurch gekennzeichnet, daß** die Durchbrechung (4) auf der Saugseite und/oder Druckseite des Rotorblatts angeordnet ist.

19. Rotorblatt nach Anspruch 17 oder 18, **dadurch gekennzeichnet, daß** die Durchbrechung (4) auf der Saugseite und/oder Druckseite eine längliche Form besitzt.

20. Rotorblatt nach einem der Ansprüche 13 bis 19, **dadurch gekennzeichnet, daß** der Hohlraum im Bereich der Durchbrechung eine verschließbare Zugriffsöffnung aufweist.

21. Rotorblatt nach Anspruch 20, **dadurch gekennzeichnet, daß** mindestens ein Siebelement in dem Hohlraum nahe der Zugriffsöffnung angeordnet ist, wobei das Siebelement eine quer zur Längsrichtung des Rotorblatts stehende Auffangfläche besitzt.

22. Rotorblatt nach einem der Ansprüche 13 bis 21, **dadurch gekennzeichnet, daß** das poröse Material in den Hohlraum vorsteht.

23. Rotorblatt nach einem der Ansprüche 13 bis 22, **dadurch gekennzeichnet, daß** als poröses Material ein Aluminiumschaum vorgesehen ist.

24. Rotorblatt nach einem der Ansprüche 13 bis 22, **dadurch gekennzeichnet, daß** als poröses Material über einen Kunststoff gebundene Edelstahlhohlkugeln vorgesehen sind.

25. Rotorblatt nach einem der Ansprüche 13 bis 22, **dadurch gekennzeichnet, daß** als poröses Material ein gesintertes Kunststoffmaterial vorgesehen ist.

26. Rotorblatt nach einem der Ansprüche 13 bis 22, **dadurch gekennzeichnet, daß** als poröses Material ein poröses Kunststoffmaterial vorgesehen ist.
